# EUROPEAN PATENT APPLICATION

(11) **EP 2 166 293 A2**
(43) Date of publication of application: **24.03.2010**
(21) Application number: 09160082.5
(22) Date of filing: 13.05.2009
(51) Int. Cl.: F24F 11/00

(54) **Method for controlling air-conditioner**

(30) Priority: 18.09.2008 KR 20080091830
(71) Applicant: Samsung Electronics Co., Ltd., Suwon-si Gyeonggi-do (KR)
(72) Inventor: Jo, Su Ho, Gyeonggi-do (KR); Myoung, Kwan Joo, Gyeonggi-do (KR)
(74) Representative: Grünecker, Kinkeldey, Stockmair & Schwanhäusser Anwaltssozietät

(57) **Abstract**

An air-conditioner control method can implement flexibility and extensibility during a communication time between an outdoor unit and each indoor unit, and can improve a communication speed. A device for correcting a power factor caused by an input current delay of a three-phase inverter and a method for controlling the same are disclosed. A method for controlling an air-conditioner having a plurality of devices, each of which includes a single outdoor unit and several indoor units, includes, acquiring tracking information of the several devices, allowing the several devices to share the tracking information, and transmitting operation information of each device without transmitting the tracking information during an operation time of the air-conditioner.

## Description

### CROSS-REFERENCE TO RELATED APPLICATION

This application claims the benefit of Korean Patent Application No. 2008-0091830, filed on September 18, 2008 in the Korean Intellectual Property Office, the disclosure of which is incorporated herein by reference.

### BACKGROUND OF THE INVENTION

### 1. Field of the Invention

The present invention relates to a method for controlling the air-conditioner, and more particularly to a method for controlling an air-conditioner in which several indoor units are connected to one outdoor unit.

### 2. Description of the Related Art

An air-conditioner has been generally used to cool or heat room air. The air-conditioner allows a refrigerant to be circulated between indoor and outdoor units, absorbs heat when a liquid refrigerant is vaporized, and emits heat when the refrigerant is liquefied, such that it cools and heats the room air. The cooling or heating operation of the air-conditioner is decided by a circulation direction of the refrigerant in a refrigerant cycle.

In a basic construction of the air-conditioner, one indoor unit is connected to one outdoor unit. Recently, there is developed a system air-conditioner (i.e., or a multi-type air-conditioner) in which a plurality of indoor units are connected to one or more outdoor units such that several rooms of a school or a huge building or apartment are cooled or heated, such that the demand of using this system air-conditioner is rapidly increasing.

The air-conditioner having several indoor units must guarantee fluent data communication between each outdoor unit and each indoor unit. A master-slave (M-S) scheme may be used as a representative communication method. The master-slave scheme connects several indoor units to the outdoor unit via a unidirectional communication line, uses the outdoor unit as a communication master, and uses the remaining indoor units as slaves, such that it can control the communication between the indoor and outdoor units.

### SUMMARY OF THE INVENTION

Therefore, it is an aspect of the invention to provide a method for controlling an air-conditioner in which several indoor units are connected to one outdoor unit. As the cooling/heating capability of the air-conditioner increases and a simultaneous-type cooling/heating air-conditioner, and a module-type air-conditioner are introduced to the market, the number of devices constructing the air-conditioner rapidly increases, and the amount of shared information also rapidly increases. Under this condition, in order to share information of the entire system using the unidirectional communication, communication of individual devices must be systematically designed.

Additional aspects and/or advantages of the invention will be set forth in part in the description which follows and, in part, will be obvious from the description, or may be learned by practice of the invention.

In accordance with the invention, the above and/or other aspects can be achieved by the provision of a method for controlling an air-conditioner having a plurality of devices, each of which includes a single outdoor unit and several indoor units, the method comprising: acquiring tracking information of the several devices; allowing the several devices to share the tracking information; and transmitting operation information of each device without transmitting the tracking information during an operation time of the air-conditioner.

The method may further comprise: transmitting changed operation information of each device.

A data packet for transmitting the operation information may have a data zone in which one index is combined with one operation information.

The data zone of the data packet may have a variable length.

The several devices may communicate with each other according to a token ring scheme.

The method may further comprise: assigning different orders to the individual devices, and if one device receives data from another device having a next communication order, recognizing that old data having been transmitted from the one device has been received in other devices.

The method may further comprise: if a new device is additionally installed in the air-conditioner, updating the tracking information by reflecting a new device; and allowing the several devices to share the updated tracking information.

The several devices may include a refrigerant distributor.

The several devices may include a controller controlling the several indoor units, and the controller may communicate with the outdoor unit according to either one of a time division multiple access (TDMA) scheme and a master-slave (MS) scheme.

The method may further comprise: if a control event of the controller occurs when the outdoor unit is a communication master, receiving, by the controller, a control authority from the outdoor unit, and controlling the several indoor units.

The remaining devices other than the controller may communicate with each other according to a token-ring scheme.

The controller may call only an objective device to be controlled, and may communicate with the objective device.

The several devices further may include a controller controlling the several indoor units, and all of the several devices each including the controller may communicate with each other according to a token-ring scheme.

The controller may call only an objective device to be controlled, and may communicate with the objective device.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a block diagram illustrating an air-conditioner according to a first embodiment of the present invention;
FIG. 2 is a structural diagram illustrating a data packet according to the present invention;
FIG. 3 is a flow chart illustrating a method for controlling an air-conditioner according to a first embodiment of the present invention;
FIG. 4 is a block diagram illustrating an air-conditioner according to a second embodiment of the present invention;
FIG. 5 is a structural diagram illustrating a method for controlling an air-conditioner according to a second embodiment of the present invention;
FIG. 6 is a structural diagram illustrating a method for controlling an air-conditioner according to a third embodiment of the present invention; and
FIG. 7 is a flow chart illustrating a method for controlling an air-conditioner according to a third embodiment of the present invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to like elements throughout. The embodiments are described below to explain the present invention by referring to the figures.

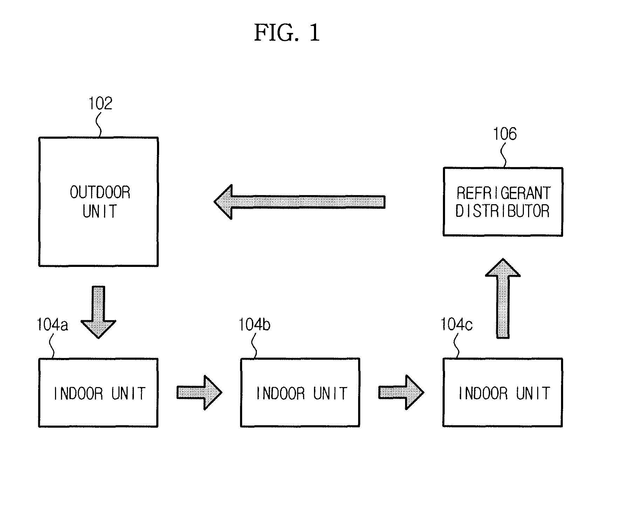

Embodiments of the present invention will hereinafter be described with reference to FIGS. 1 to 7. FIG. 1 is a block diagram illustrating an air-conditioner according to a first embodiment of the present invention. Referring to FIG. 1, the air-conditioner according to the first embodiment of the present invention connects a plurality of indoor units 104a, 104b, and 104c to a single outdoor unit 102, a refrigerant is distributed to the indoor units 104a, 104b, and 104c by a refrigerant distributor 106. In this case, the outdoor unit 102, the indoor units 104a, 104b, and 104c, and the refrigerant distributor 106 are called a plurality of devices constructing the air-conditioner.

As can be seen from FIG. 1, the outdoor unit 102, the indoor units 104a, 104b, and 104c, and the refrigerant distributor 106 communicate with one another using a token-ring scheme. The token-ring scheme circulates a short message called a token during a blank time, such that it controls several transmission actions in a network having a ring-shaped physical transmission path. A node (e.g., a device) acquiring this short message has an authority of controlling communication. According to the token-ring scheme, transmission (Tx) data units arranged in the form of a relay along a node placed on a transmission (Tx) path are sequentially transmitted to a reception node. In other words, the outdoor unit 102, the indoor units 104a, 104b, and 104c and the refrigerant distributor 106 are used as nodes constructing a single token-ring network.

The air-conditioner according to the present invention defines only one data in a single index, such that it guarantees the extensibility and flexibility of a transmission (Tx) data packet during a communication time. In case of a mode type, several data units are defined in one index, such that the size of the data packet can be reduced. However, if a meaning of any of several data units is changed, another derivation mode for defining this changed data is needed, such that it is difficult to manage and use the air-conditioner, resulting in reduction of the extensibility and flexibility. According to this embodiment of the present invention, only one data is defined in one index, and the constituent devices of the air-conditioner communicate with each other, resulting in a guarantee of the extensibility and flexibility. Installation information (i.e., tracking information) of individual devices of the air-conditioner is shared by all devices. During the operation time of the air-conditioner, the air-conditioner transmits only the changed information of each device without transmitting this tracking information. For this purpose, the air-conditioner is operated on the condition that only one data is defined in one index.

The air-conditioner performs tracking of each device during an initial operation time of the outdoor unit 102, such that it obtains tracking information. All devices share this tracking information. Specifically, unique information (e.g., device model, a software version, and an option) contained in the tracking information is shared by all devices during the tracking operation, and is not transmitted during a general communication mode. Meanwhile, during the general communication mode, the air-conditioner generally transmits corresponding information only when an unexpected change occurs in an object of little change. In more detail, during the general communication mode, the air-conditioner does not transmit invariable information such as the tracking information, and transmits only the changed information (e.g., temperature information) from among changeable information, such that it can greatly reduce the size of data in a transmission (Tx) packet. Specifically, if several changed operation information units exist, each index and a changed data value are bound in one data packet, and this data packet is transmitted. This data packet structure reduces the data size, such that a communication speed increases.

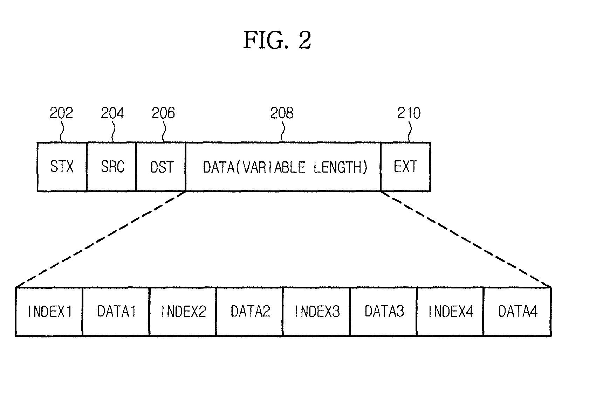

FIG. 2 is a structural diagram illustrating a data packet according to the present invention. Referring to FIG. 2, STX 202 is a signal indicating the beginning of communication, and SRC 204 is an address of a transmission device. DST 206 is an address of a reception device receiving transmitted information. The size of data 208 is variable. ETX 210 is a signal indicating the completion of communication.

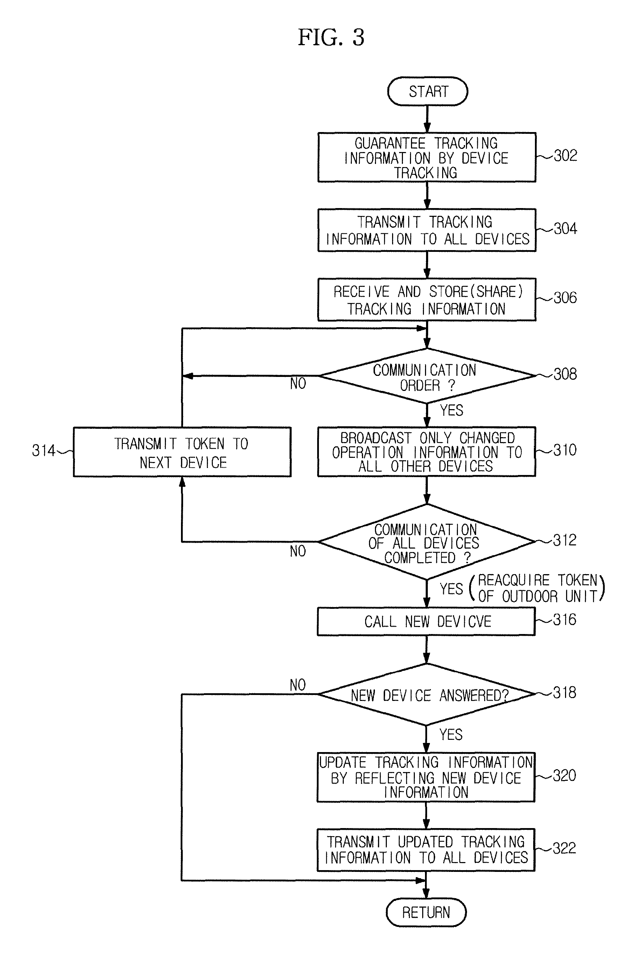

FIG. 3 is a flow chart illustrating a method for controlling an air-conditioner according to a first embodiment of the present invention. Referring to FIG. 3, an outdoor unit 102 calls several indoor units 104a, 104b, and 104c and the refrigerant distributor 106 of the air-conditioner, and performs a device tracking to guarantee installation information (i.e., tracking information) of each device including the outdoor unit 102 at operation 302. The outdoor unit 102 transmits the tracking information guaranteed by the device tracking to each device at operation 304. All devices receive this tracking information, store the received information, and share the stored information at operation 306.

Under the condition that the device tracking has been completed, if a current communication order reaches one of communication orders of the devices (e.g., outdoor unit 102, indoor units 104a∼104c, and refrigerant distributor 106) (YES at operation 308), one device having the corresponding communication order broadcasts their operation to other devices without receiving a call signal from the outdoor unit 102 at operation 310. For example, if the outdoor unit 102 transmits its own operation information to other remaining devices, the indoor unit 104a receiving the operation information of the outdoor unit 102 receives a token, and transmits its own operation information to other remaining devices. The outdoor unit 102 receives operation information of the indoor unit 104a having the next communication order, such that it acknowledges that the indoor unit 104a has normally received the operation information of the outdoor unit 102. In this case, the transmitted operation information corresponds to all operation information of the individual devices other than pre-shared tracking information. In order to reduce the size of Tx data, only the changed operation information among the operation information of the individual devices may be optionally transmitted.

If communication among all devices has been completed by the completion of one cycle of the communication (YES at operation 312), a current order reaches a communication order of the outdoor unit 102, such that reacquisition of the token is carried out. If there is any device to be communicated with other devices in the communication of one cycle because one cycle of the communication has not been completed (No at operation 312), the token is delivered to the next device at operation 314.

Since a new device can be additionally installed although the tracking information of the devices constructing the air-conditioner has been acquired by the device tracking, the outdoor unit 102 detects the installation of the new device, and updates the tracking information. For this operation, the outdoor unit 102 transmits a call signal of the new device via the token-ring network at operation 316. If the new device is installed and answers the call signal of the outdoor unit 102 (YES at operation 318), the air-conditioner acquires device information and installation information from the new device, and updates the tracking information of the air-conditioner at operation 320. The outdoor unit 102 transmits the updated tracking information to other devices, such that all the devices share the updated tracking information at operation 322.

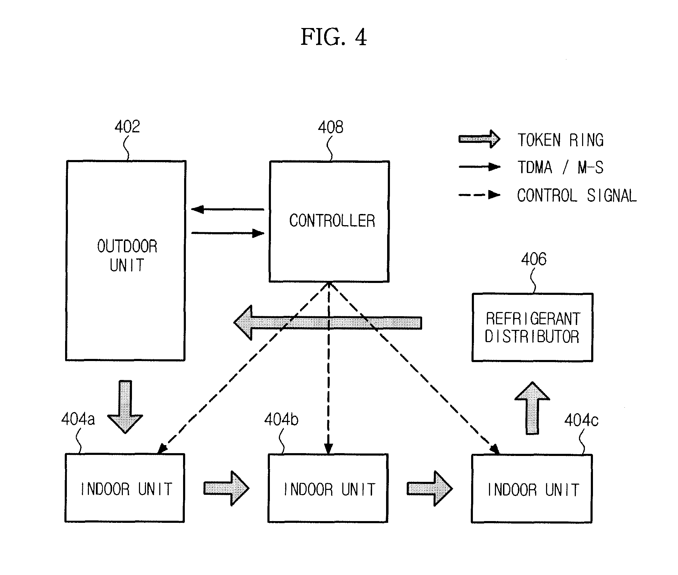

FIG. 4 is a block diagram illustrating an air-conditioner according to a second embodiment of the present invention. The air-conditioner according to the second embodiment of the present invention connects a plurality of indoor units 404a∼404c to a single outdoor unit 402, such that a refrigerant is distributed to the indoor units 404a∼404c by the refrigerant distributor 406. In this case, the outdoor unit 402, the indoor units 404a∼404c, and the refrigerant distributor 406 are called several devices constructing the air-conditioner. The indoor units 404a∼404c and the refrigerant distributor 406 basically communicate with the outdoor unit 402. The indoor units 404a∼404c may also be controlled by an additional controller 408. The controller 408 may be either an indoor controller which transmits a control command to the indoor units 404a∼404c at rooms having the indoor units 404a∼404c, or a central controller for managing the air-conditioner. This controller 408 may communicate with not only each of the indoor units 404a∼404c but also the outdoor unit 402. The controller 408 and the outdoor unit 402 may communicate with each other according to a master-slave (M-S) scheme or a time division multiple access (TDMA) scheme. In other words, the outdoor unit 402 communicates with the controller 408 by calling the controller 408. Otherwise, the outdoor unit 402, the indoor units 404a∼404c, and the refrigerant distributor 406 communicate with one another according to the token-ring scheme. This token-ring scheme circulates a short message called a token during a blank time, such that it controls several transmission actions in a network having a ring-shaped physical transmission path. A node (e.g., a device) acquiring this short message has an authority of controlling communication. According to the token-ring scheme, transmission (Tx) data units arranged in the form of a relay along a node placed on a transmission (Tx) path are sequentially transmitted to a reception node. In other words, the outdoor unit 402, the indoor units 404a, 404b, and 404c and the refrigerant distributor 406 are used as nodes constructing a single token-ring network.

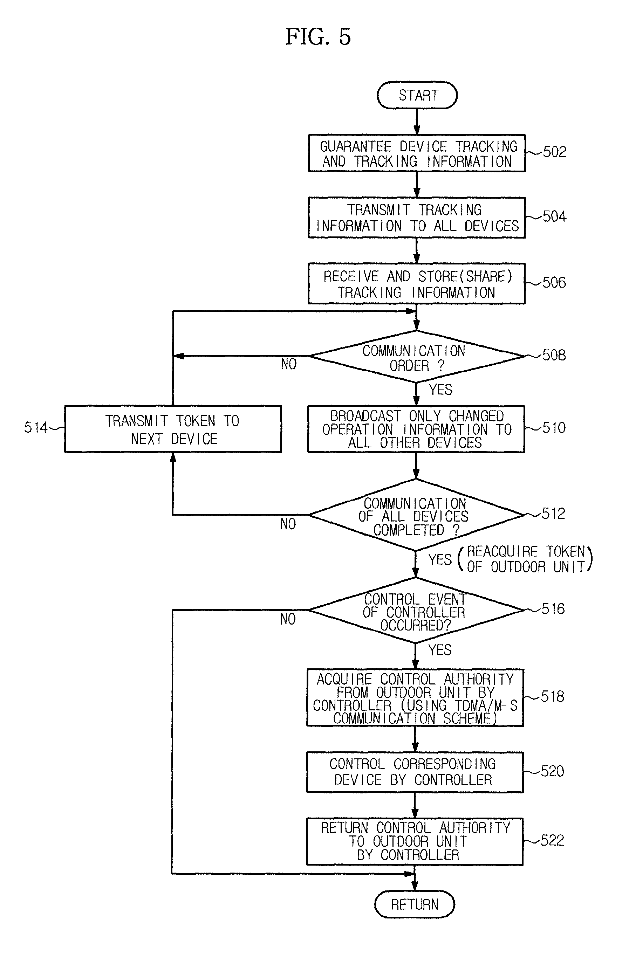

FIG. 5 is a structural diagram illustrating a method for controlling an air-conditioner according to a second embodiment of the present invention. Referring to FIG. 5, an outdoor unit 402 calls several indoor units 404a, 404b, and 404c and the refrigerant distributor 406 of the air-conditioner, and performs a device tracking to guarantee installation information (i.e., tracking information) of each device including the outdoor unit 102 at operation 502. The outdoor unit 502 transmits the tracking information guaranteed by the device tracking to each device at operation 504. All devices receive this tracking information, store the received information, and share the stored information at operation 506.

Under the condition that the device tracking has been completed, if a current communication order reaches one of communication orders of the devices (e.g., outdoor unit 402, indoor units 404a∼404c, and refrigerant distributor 406) (YES at operation 508), one device having the corresponding communication order broadcasts their operation to other devices without receiving a call signal from the outdoor unit 402 at operation 510. For example, if the outdoor unit 402 transmits its own operation information to other remaining devices, the indoor unit 404a receiving the operation information of the outdoor unit 402 receives a token, and transmits its own operation information to other remaining devices. The outdoor unit 402 receives operation information of the indoor unit 404a having the next communication order, such that it acknowledges that the indoor unit 404a has normally received the operation information of the outdoor unit 402. In this case, the transmitted operation information corresponds to all operation information of the individual devices other than pre-shared tracking information. In order to reduce the size of Tx data, only the changed operation information among the operation information of the individual devices may be optionally transmitted.

If communication among all devices has been completed by the completion of one cycle of the communication (YES at operation 512), a current order reaches a communication order of the outdoor unit 402, such that reacquisition of the token is carried out. If there is any device to be communicated with other devices in the communication of one cycle because one cycle of the communication has not been completed (No at operation 512), the token is delivered to the next device at operation 514.

In this case, if there is a control event by which any of devices (e.g., indoor units 404a∼404c) must be controlled (YES at operation 516), the controller 408 requests a control authority from the outdoor unit 402 acting as a communication master based on the M-S or TDMA scheme in order to guarantee a control authority of a communication master controlling any objective device at operation 518. The outdoor unit 402 answers the control authority request of the controller 408, transfers the control authority to the controller 408, and enters a standby mode until the controller 408 returns the control authority. The controller 408 controls the device to be controlled using the received control authority at operation 520. The controller 408, which has completely controlled the corresponding device, returns the control authority to the outdoor unit 402, and completes the control at operation 522. In other words, a method for controlling the air-conditioner according to the second embodiment calls only a specific device to be controlled, and controls the called device, such that it restricts the occurrence of unnecessary communication load, differently from the conventional method which calls and controls all devices.

According to another method for exchanging a control authority acting as a communication master of the outdoor unit 402 or the controller 408, the outdoor unit 402 periodically asks the controller 408 whether the control authority is needed. If the controller 408 determines that the control authority is needed, the outdoor unit 402 may transfer the control authority to the controller 408 as necessary.

According to still another method for exchanging the control authority acting as a communication master of the outdoor unit 402 or the controller 408, when the outdoor unit 402 answers the request of the controller 408 and transfers the control authority to the controller 408, the air-conditioner may establish a specific time needed for controlling objective devices (e.g., the indoor units 404a∼404c) of the controller 408 in consideration of the number of the objective devices of the controller 408, and may deliver the control authority to the controller 408 during only this specific time. If this specific time has elapsed, the outdoor unit 402 withdraws the control authority from the controller 408, such that it can be used as the communication master.

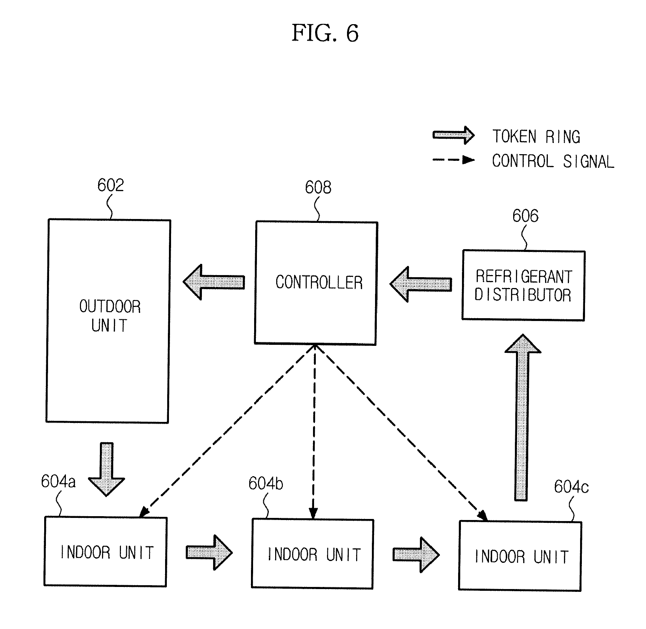

FIG. 6 is a structural diagram illustrating a method for controlling an air-conditioner according to a third embodiment of the present invention. The air-conditioner according to the third embodiment of the present invention connects a plurality of indoor units 604a∼604c to a single outdoor unit 602, such that a refrigerant is distributed to the indoor units 604a∼604c by the refrigerant distributor 606. In this case, the outdoor unit 602, the indoor units 604a∼604c, and the refrigerant distributor 606 are called several devices constructing the air-conditioner. The indoor units 604a∼604c and the refrigerant distributor 606 basically communicate with the outdoor unit 602. The indoor units 604a∼604c may also be controlled by an additional controller 608. The controller 608 may be either an indoor controller which transmits a control command to the indoor units 604a∼604c at rooms having the indoor units 604a∼604c, or a central controller for managing the air-conditioner. The controller 608, the outdoor unit 602, the indoor units 604a∼604c, and the refrigerant distributor 606 communicate with one another according to the token-ring scheme. This token-ring scheme circulates a short message called a token during a blank time, such that it controls several transmission actions in a network having a ring-shaped physical transmission path. A node (e.g., a device) acquiring this short message has an authority of controlling communication. According to the token-ring scheme, transmission (Tx) data units arranged in the form of a relay along a node placed on a transmission (Tx) path are sequentially transmitted to a reception node. In other words, the outdoor unit 602, the indoor units 604a, 604b, and 604c and the refrigerant distributor 606 are used as nodes constructing a single token-ring network.

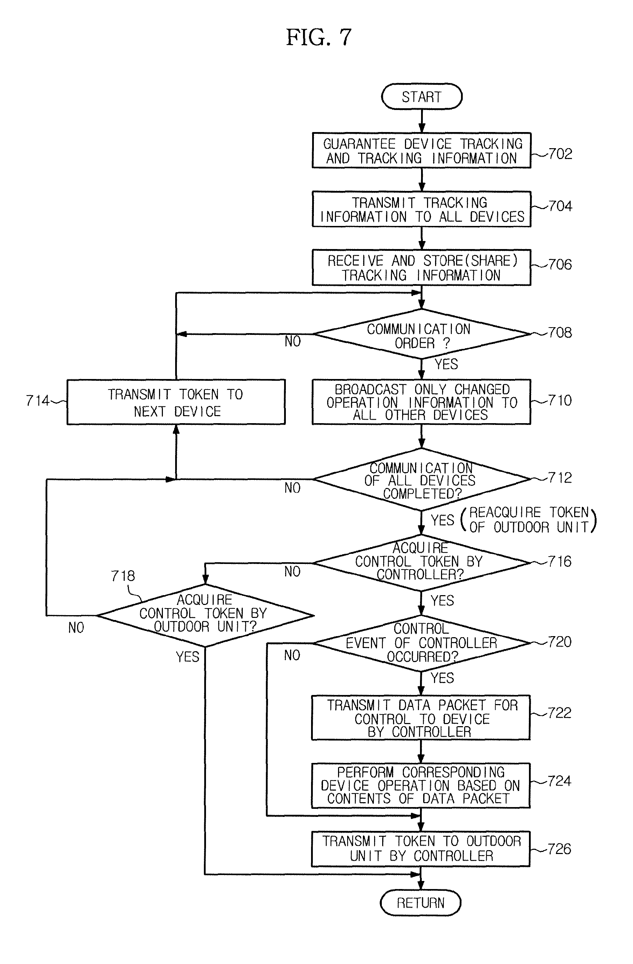

FIG. 7 is a structural diagram illustrating a method for controlling an air-conditioner according to a third embodiment of the present invention. Referring to FIG. 7, an outdoor unit 602 calls several indoor units 604a, 604b, and 604c and the refrigerant distributor 606 of the air-conditioner, and performs a device tracking to guarantee installation information (i.e., tracking information) of each device including the outdoor unit 102 at operation 702. The outdoor unit 602 transmits the tracking information guaranteed by the device tracking to each device at operation 704. All devices receive this tracking information, store the received information, and share the stored information at operation 706.

Under the condition that the device tracking has been completed, if a current communication order reaches one of communication orders of the devices (e.g., outdoor unit 602, indoor units 604a∼604c, and refrigerant distributor 606) (YES at operation 708), one device having the corresponding communication order broadcasts their operation to other devices without receiving a call signal from the outdoor unit 602 at operation 710. For example, if the outdoor unit 602 transmits its own operation information to other remaining devices, the indoor unit 604a receiving the operation information of the outdoor unit 602 receives a token, and transmits its own operation information to other remaining devices. The outdoor unit 602 receives operation information of the indoor unit 604a having the next communication order, such that it acknowledges that the indoor unit 604a has normally received the operation information of the outdoor unit 602. In this case, the transmitted operation information corresponds to all operation information of the individual devices other than pre-shared tracking information. In order to reduce the size of Tx data, only the changed operation information among the operation information of the individual devices may be optionally transmitted.

It is determined whether communication among all devices has been completed due to the completion of one cycle of the communication at operation 712. If there is any device to be communicated with other devices in the communication of one cycle because one cycle of the communication has not been completed (NO at operation 712), the token is delivered to the next device at operation 714. Otherwise, if communication of all devices is completed (YES at operation 712), the air-conditioner determines whether the controller 608 has acquired the token at operation 716. If the controller 608 has not acquired the token (NO at operation 716), the air-conditioner determines whether the outdoor unit 602 has acquired the token at operation 718. If the outdoor unit 602 has not acquired the token (NO at operation 718), the token is delivered to the next device at operation 714. If the outdoor unit 602 has acquired the token (YES at operation 718), the device is controlled by the outdoor unit 602.

Referring back to the token acquisition decision step of the controller 608 at operation 716, if the controller 608 has acquired the token (YES at step 716), the air-conditioner determines the presence or absence of the control event at operation 720. If the control event of the controller 608 is not generated (NO at operation 720), the controller 608 transfers the control token to the outdoor unit 602 at operation 726. If there arises a control event by which the controller 608 must control any of the devices (e.g., the indoor units 604a∼606c) (YES at operation 720), the controller 608 broadcasts a data packet for controlling the objective device to other devices over the token-ring network at operation 722. This data packet includes a reception device address, such that a device (i.e., a target device to be controlled), which must receive this data packet, receives the data packet, which has been transmitted to this device itself, and performs operations based on contents of the received data, resulting in the implementation of necessary control operations at operation 724. If the controller 608 completes the control of the corresponding device, it transmits the control token to the outdoor unit 602 at operation 726. In other words, the method for controlling the air-conditioner according to the third embodiment allows all the devices connected to the token-ring network to sequentially have the control authority, calls the device (i.e., indoor unit) to be controlled, and controls the called device.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A method for controlling an air-conditioner having a plurality of devices, each of which includes a single outdoor unit and several indoor units, the method comprising:
acquiring tracking information of the several devices;
allowing the several devices to share the tracking information; and
transmitting operation information of each device without transmitting the tracking information during an operation time of the air-conditioner.

2. The method according to claim 1, further comprising:
transmitting changed operation information of each device.

3. The method according to claim 1, wherein:
a data packet for transmitting the operation information has a data zone in which one index is combined with one operation information.

4. The method according to claim 3, wherein the data zone of the data packet has a variable length.

5. The method according to claim 1, wherein the several devices communicate with each other according to a token ring scheme.

6. The method according to claim 5, further comprising:
assigning different orders to the individual devices, and
if one device receives data from another device having a next communication order, recognizing that old data having been transmitted from the one device has been received in other devices.

7. The method according to claim 1, further comprising:
if a new device is additionally installed in the air-conditioner, updating the tracking information by reflecting a new device; and
allowing the several devices to share the updated tracking information.

8. The method according to claim 1, wherein the several devices include a refrigerant distributor.

9. The method according to claim 1, wherein:
the several devices include a controller controlling the several indoor units, and
the controller communicates with the outdoor unit according to either one of a time division multiple access (TDMA) scheme and a master-slave (MS) scheme.

10. The method according to claim 9, further comprising:
if a control event of the controller occurs when the outdoor unit is a communication master, receiving, by the controller, a control authority from the outdoor unit, and controlling the several indoor units.

11. The method according to claim 9, wherein remaining devices other than the controller communicate with each other according to a token-ring scheme.

12. The method according to claim 11, wherein the controller calls only an objective device to be controlled, and communicates with the objective device.

13. The method according to claim 1, wherein:
the several devices further include a controller controlling the several indoor units, and
all of the several devices each including the controller communicate with each other according to a token-ring scheme.

14. The method according to claim 13, wherein the controller calls only an objective device to be controlled, and communicates with the objective device.
